(19) Europäisches Patentamt
European Patent Office
Office européen des brevets

(11) **EP 1 229 312 B1**

(12) **FASCICULE DE BREVET EUROPEEN**

(45) Date de publication et mention
de la délivrance du brevet:
**11.02.2015 Bulletin 2015/07**

(51) Int Cl.:
***G01F 23/24*** *(2006.01)*

(21) Numéro de dépôt: **02290193.8**

(22) Date de dépôt: **29.01.2002**

(54) **Dispositif de mesure du niveau d'un liquide**

Vorrichtung zum Messen des Füllstandes einer Flüssigkeit

Device for measuring the level of a liquid

(84) Etats contractants désignés:
**AT BE CH CY DE DK ES FI FR GB GR IE IT LI LU
MC NL PT SE TR**

(30) Priorité: **31.01.2001 FR 0101295**

(43) Date de publication de la demande:
**07.08.2002 Bulletin 2002/32**

(73) Titulaire: **SC2N
78180 Montigny-le-Bretonneux (FR)**

(72) Inventeur: **Castro, Pascal
14120 Mondeville (FR)**

(74) Mandataire: **de Lambilly Delorme, Marie Pierre
Valéo Systèmes de Contrôle Moteur
14 avenue des Béguines
BP 68532
95892 Cergy Pontoise Cedex (FR)**

(56) Documents cités:
**EP-A- 0 340 309     FR-A- 2 703 775
FR-A- 2 808 086     US-A- 4 789 946
US-A- 5 228 340**

**Description**

La présente invention concerne le domaine de la détection du niveau d'un liquide.

De nombreux dispositifs à cet effet ont déjà été proposés.

On a décrit par exemple dans le document FR-A-2 367 276, un dispositif permettant le contrôle du niveau de liquide contenu dans un réservoir. Ce dispositif comporte une sonde résistive partiellement immergée dans le liquide, des moyens d'alimentation capables d'appliquer de l'énergie électrique à ladite sonde, des moyens sensibles à l'une au moins des grandeurs électriques tension et courant dans la sonde, et des moyens pour surveiller l'évolution de ladite grandeur à partir de sa valeur initiale, au début de l'application d'énergie électrique, afin d'en déduire des informations sur le niveau de liquide. L'indication de niveau obtenue selon ce document antérieur est assez fiable pour permettre par exemple une alerte lorsqu'un seuil de niveau est atteint.

Des variantes et/ou évolutions de ce dispositif ont été décrits par exemple dans les documents FR-A-2 514 497, FR-A-2 690 521, FR-A-2 703 774 et FR-A-2 703 775.

Le document US 5,321,633 décrit un dispositif de détection du niveau d'un liquide comprenant un capteur dé niveau, destinée à être au moins partiellement immergée, des moyens d'alimentation électrique capables d'appliquer périodiquement des impulsions de courant électrique constantes, et des moyens d'enregistrement connectés aux capteurs pour enregistrer le potentiel initial capté. Par ailleurs, des moyens de contrôle détectent les potentiels correspondant à des temps successifs, et divisent les valeurs de ces potentiels par la valeur du potentiel enregistré, afin d'obtenir les rapports pour exclure toute influence de la température. Les moyens de contrôle calculent ensuite un potentiel approximé et déterminent alors, à partir de ce potentiel approximé, le niveau du liquide.

Le document FR 2 690 521 quant à lui propose un dispositif de mesure du niveau d'un liquide comprenant une sonde résistive à coefficient de température élevé, destinée à être plongée dans le liquide d'un réservoir, un élément d'alimentation en courant de la sonde et des moyens permettant de comparer la tension initiale aux bornes de la sonde, à la tension présente aux bornes de celle-ci au bout d'un temps t, pour lequel la sonde a atteint ou tout du moins a approché son état de stabilité thermique, la sonde comprenant en outre au moins un épanouissement sensiblement horizontal, libre d'échange thermique avec le milieu environnant liquide/air, au niveau d'un seuil à détecter.

La présente invention a maintenant pour but de proposer un nouveau dispositif de détection du niveau d'un liquide.

Ce but est atteint dans le cadre de la présente invention grâce à un dispositif selon la revendication 1.

Selon une autre caractéristique avantageuse de la présente invention, le dispositif comporte en outre des moyens de correction en fonction de la température du liquide.

Selon la variante retenue, les moyens de correction en fonction de la température peuvent agir sur l'amplitude du courant injecté dans la sonde résistive, sur la plage de mesure définie entre la valeur minimale et la valeur maximale ou sur la valeur mesurée.

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 représente une vue schématique d'un dispositif conforme à une structure générale de la présente invention, et
- les figures 2, 3 et 4 représentent des modes de réalisation particuliers conformes à trois variantes de réalisation de l'invention.

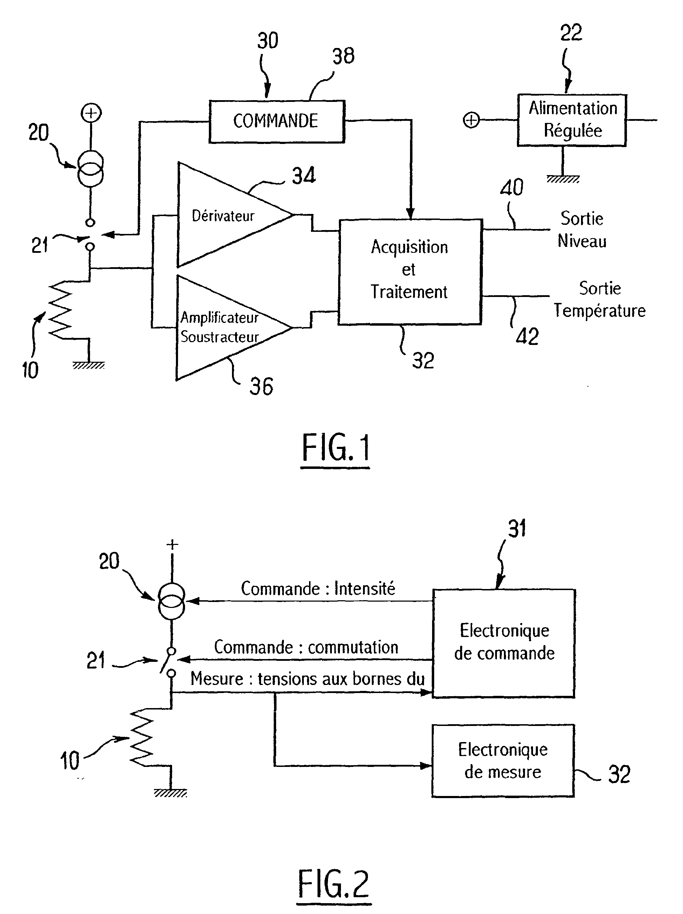

On aperçoit sur la figure 1 annexée un dispositif de mesure de niveau de liquide comprenant une sonde résistive 10 destinée à être au moins partiellement immergée dans un liquide, des moyens 20 d'alimentation électrique de la sonde résistive 10, contrôlés par une alimentation régulée 22 et capables d'appliquer un courant d'alimentation électrique contrôlé à la sonde 10, et des moyens de traitement 30.

Comme on l'a indiqué précédemment ces moyens de traitement 30 comprennent d'une part des moyens de surveillance de la dérivée de tension résultante aux bornes de la sonde 10 et d'autre part des moyens de comparaison, aptes à comparer la valeur de la dérivée ainsi obtenue avec une échelle prédéfinie entre une valeur minimale et une valeur maximale connues.

Plus précisément encore, selon le mode réalisation illustré sur la figure 1, les moyens de traitement 30 comprennent un module 32 d'acquisition et de traitement qui reçoit des informations en provenance d'un dérivateur 34 et en parallèle d'un amplificateur soustracteur 36 dont les entrées sont reliées aux bornes de la sonde 10. Par ailleurs les moyens de traitement 30 comprennent un module de commande 38 piloté par le module d'acquisition et traitement 32 pour contrôler l'application du courant d'alimentation issu des moyens 20 sur la sonde 10. A cet effet, il est prévu entre la sonde 10 et les moyens d'alimentation 20, des moyens interrupteurs, schématisés sous la référence 21, qui sont pilotés par le module 38.

On a schématisé sur la figure 1 annexée deux sorties 40, 42, du module d'acquisition et traitement 32 délivrant respectivement une information représentative du niveau de liquide et une information représentative de la température du liquide.

Le dispositif de mesure du niveau de liquide (par exemple huile, eau...) illustré sur la figure 1 annexée, conforme à la présente invention, fonctionne de la manière suivante.

La sonde 10, formée par exemple d'un fil conducteur électrique ayant un coefficient de température important est partiellement plongé dans le liquide. Le rapport des longueurs des fils émergée et immergée dépend du niveau du liquide. Au moment où on désire faire une mesure du niveau, un courant électrique d'intensité connue, issu des moyens 20, est injecté, pendant un court instant, dans la sonde 10. Simultanément le module 32 d'acquisition et de traitement mesure la dérivée par rapport au temps de la tension aux bornes de la sonde 10.

Cette dérivée, une fois normée avec les valeurs obtenues quand le fil est entièrement immergé et émergé, est proportionnelle au niveau du liquide.

Un temps de refroidissement est nécessaire avant de pouvoir recommencer la mesure.

La température du liquide est obtenue avec le même dispositif. Au moment où le courant commence à être injecté dans la sonde 10, pour obtenir la valeur du niveau de liquide, on mesure la tension aux bornes de la sonde 10. Si la valeur du courant est constante et connue, on peut en déduire la valeur de la résistance ohmique de la sonde 10. En connaissant la loi de variation de la résistance électrique de la sonde 10 en fonction de la température, ainsi que la valeur de la tension aux bornes de la sonde 10 à une température donnée, il est aisé de connaître la température du fil (moyennée sur sa longueur). En faisant en sorte qu'il n'y ait pas de gradient thermique important, on peut considérer que la sonde 10 est de la même température que le liquide.

En considérant la sonde 10, réalisée généralement sous forme d'un fil conducteur, comme un empilement de disques de diamètre D et d'épaisseur dl, chacun parcouru par un courant I, et dissipant donc de la chaleur, les différents disques ou éléments étant susceptibles d'être positionnés dans deux environnements distincts, soit immergé, soit émergé, et en considérant que dans le premier cas, la chaleur dégagée est dissipée dans le liquide de sorte que l'élévation de la température par rapport au temps est faible, alors que dans le second cas la chaleur dégagée est dissipée dans l'air, et en conséquence l'élévation de température par rapport au temps est grande, on démontre que la valeur de la dérivée de la tension aux bornes de la sonde est linéaire en fonction du niveau de liquide.

Ainsi il apparaît que le niveau de liquide est représenté de manière fiable par la dérivée de la tension normée par rapport à ses niveaux, minimal et maximal.

En d'autres termes le signal issu de la partie analogique de la sonde 10, appelé NV, est compris entre deux valeurs NVh et NVb, correspondant respectivement aux signaux obtenus quand les niveaux sont à leur maximum et leur minimum.

Ainsi le niveau en pourcentage peut être obtenu sur la base de l'équation :

$$NV\% = (NV - NVb) / (NVh - NVb)$$

en normant le niveau par rapport à NVb, c'est-à-dire le niveau bas .

Ou encore sur la base de l'équation :

$$NV\% = (NV - NVh) / (NVh - NVb)$$

les rôles de NVh et NVb étant parfaitement interchangeables dans la mesure.

Néanmoins, comme on l'a dit précédemment, les valeurs NVb, NVh et NV dépendent de la température. Cela vient du fait que l'on injecte un courant constant dans la sonde 10 et que la résistance électrique du fil, composant la sonde 10, dépend de la température.

A courant constant la puissance injectée dans la sonde 10 varie donc en fonction de la température. Le niveau étant proportionnel à la puissance injectée, celui-ci est fonction de la température de façon linéaire.

De ce fait, comme indiqué précédemment, de préférence dans le cadre de la présente invention il est prévu des moyens assurant une compensation sur le résultat, en fonction de la température.

Différents moyens peuvent être prévus à cet effet.

Dans le cadre de la présente invention, deux catégories de correction sont envisagées : l'une procède par contrôle de la puissance d'alimentation pour maintenir celle-ci constante, l'autre procède par une correction à posteriori sur la mesure.

La correction par contrôle d'une puissance constante peut elle-même faire l'objet de plusieurs variantes de réalisations.

Selon une première variante de réalisation, le courant est injecté dans la sonde 10 par l'intermédiaire d'une résistance ayant un coefficient en fonction de la température comparable à la sonde 10.

Selon une seconde variante, comme illustré sur la figure 2, les moyens de traitement 30 comprennent un module 31 qui mesure la tension aux bornes de la sonde 10 et règle l'intensité du courant injecté dans celle-ci. Avant chaque acquisition de niveau, le module de commande 31 règle ainsi le courant injecté de façon à ce que le produit UI, soit la puissance, soit égal à une consigne donnée. Ceci peut être fait soit par essais successifs, soit par mesure de la résistance et calcul de I (I = (P/R)$^{1/2}$). Dans ces conditions les valeurs correspondants au niveau NVh et NVb sont invariantes.

La correction à posteriori peut elle-même faire l'objet de plusieurs variantes de réalisation. Elle peut agir sur la plage de mesure délimitée par les bornes NVb et NVh, ou encore sur la valeur représentative du niveau NV elle-même.

La correction sur NVb et NVh peut elle-même faire l'objet de plusieurs modes de réalisation.

Comme on l'a indiqué précédemment le niveau est linéairement proportionnel à la température. Il est donc possible d'écrire les équations suivantes :

$$NVb(T) = NVb_O (1 + \alpha(T-T_O))$$

$$NVh(T) = NVh_O (1 + \alpha(T-T_O))$$

NVb(T) : Niveau bas en fonction de la température (à utiliser pour normer le niveau)
NVh(T) : Niveau haut en fonction de la température (à utiliser pour normer le niveau)
NVb$_o$ : Niveau bas à la température de référence T$_o$
NVh$_o$ : Niveau haut à la température de référence T$_o$
T : Température courante
T$_o$ : Température de référence
$\alpha$ : Coefficient de correction

NVb(T) et NVh(T) peuvent être calculés avant de normer le niveau NV, pour obtenir le pourcentage du niveau. Cette correction nécessite de connaître la température du fil, ce qui peut se faire par exemple en mesurant la tension sur celui-ci.

Une telle correction est réalisée entièrement par calcul.

En variante, la correction à posteriori sur NVb et NVh peut être réalisée par adaptation de la structure du dispositif.

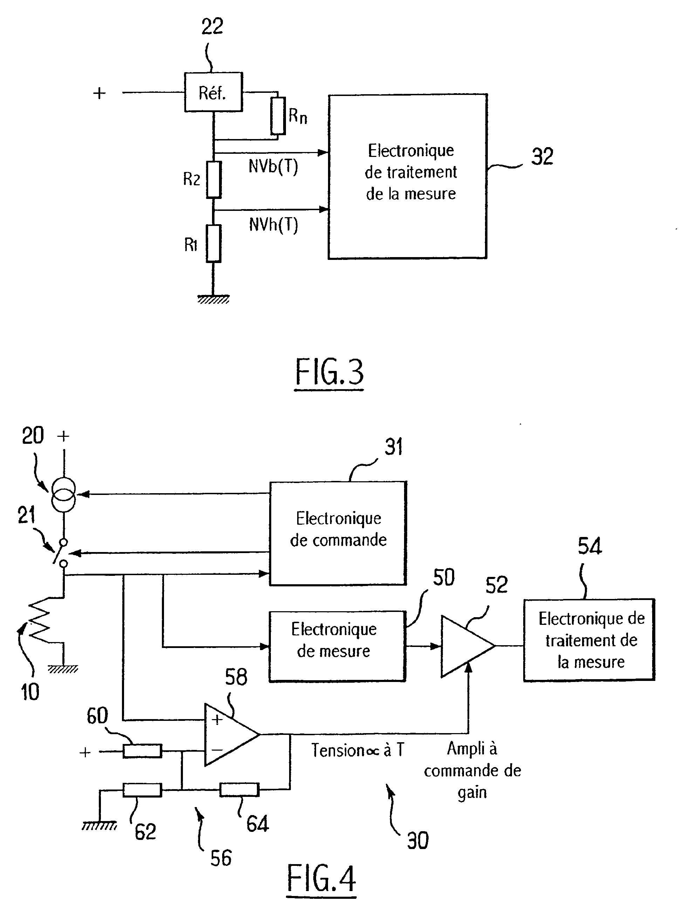

A titre d'exemple, comme on l'a illustré sur la figure 3, le dispositif peut comporter un diviseur de tension comprenant deux résistances R1 et R2 pour déterminer les valeurs NVb(T) et NVh(T). Les deux résistances R1 et R2 sont calculées de façon à donner NVb$_o$ et NVh$_o$ à T$_o$. Ce pont diviseur de tension est alimenté par un générateur de courant 22 associé à une résistance R$_\alpha$ ayant un coefficient de température $\alpha$ identique à celui du fil de la sonde 10. Un tel dispositif permet de connaître, via les entrées analogiques de l'électronique de traitement de la mesure 32, les valeurs de NVb(T) et NVh(T).

Bien évidemment il convient dans cette configuration de faire en sorte que la résistance R$_\alpha$ associée au générateur de courant 22 soit à la même température que le fil de la sonde 10.

La correction à posteriori sur la valeur représentative du niveau NV peut elle-même faire l'objet de plusieurs variantes de réalisation.

Tout comme l'on a envisagé de corriger les valeurs NVb et NVh, comme mentionné précédemment, il est possible par le calcul de corriger NV en écrivant l'équation suivante :

$$NV_c = NV(T) (1 + \alpha(T-T_O))$$

NV(T): Niveau lu par l'électronique de traitement de la mesure à la température T
NV$_c$ : Niveau Corrigé (à utiliser pour normer le niveau)
T : Température courante
T$_o$ : Température de référence
$\alpha$ : Coefficient de correction

**EP 1 229 312 B1**

Il faut dans ce cas utiliser les niveaux $NVb_o$ et $NVh_o$ (Niveau obtenu à $T_o$) pour normer $NV_o$.

Selon encore une autre variante, la correction sur la valeur mesurée NV peut être obtenue par adaptation de la structure du dispositif.

En d'autres termes la correction du signal peut être opérée au niveau de l'électronique. Pour cela par exemple on peut utiliser une amplification à gain variable comme illustré sur la figure 4.

On retrouve sur celle-ci une sonde de mesure 10 alimentée par une source de courant 20 par l'intermédiaire d'un interrupteur 21, piloté par un module de commande 31 et des moyens 30 de traitement.

Dans le cas d'espèce de la figure 4 ces moyens de traitement 30 comprennent un amplificateur à commande de gain 52, intercalé entre un module 50 de mesure, et un module 54 de traitement. L'amplificateur de commande de gain 52 est lui-même piloté par un étage 56 qui fournit une tension proportionnelle à la température.

En pratique cet étage de correction 56 peut être fondé sur un amplificateur opérationnel 58 associé à des résistances 60, 62, 64.

Plus précisément encore selon la représentation donnée sur la figure 4 l'amplificateur opérationnel 58 a son entrée non-inverseuse reliée à la sonde 10. L'entrée inverseuse de l'amplificateur opérationnel 58 est reliée à une borne de la résistance 60 dont la seconde borne est reliée à une alimentation positive. La résistance 62 est placée entre la masse et l'entrée inverseuse de l'amplificateur opérationnel 58. La résistance 64 est montée en contre réaction entre l'entrée inverseuse et la sortie de l'amplificateur opérationnel 58.

La présente invention peut donner lieu à de nombreuses applications. Elle peut être utilisée par exemple, et non exclusivement, pour la mesure d'un niveau d'eau ou d'un niveau d'huile dans un carter de véhicule automobile.

**Revendications**

1. Dispositif de détection du niveau d'un liquide comprenant :

   - une sonde résistive (10) destinée à être au moins partiellement immergée dans le liquide,
   - des moyens (20) d'alimentation électrique capables d'appliquer un courant d'alimentation électrique contrôlé à la sonde (10),
   - des moyens pour mesurer la valeur de la dérivée par rapport au temps de la tension résultante aux bornes de la sonde (10), et

   **caractérisé en ce qu'**il comprend en outre des moyens (32) pour situer le niveau de liquide entre un niveau haut et un niveau bas donnés, en comparant la valeur normée de la dérivée correspondant au niveau mesuré par rapport à une valeur obtenue pour chacun desdits niveaux haut et bas donnés.

2. Dispositif selon la revendication 1, **caractérisé par le fait qu'**il comprend en outre des moyens de correction en température du niveau de liquide mesuré.

3. Dispositif selon la revendication 2, **caractérisé par le fait que** les moyens de correction en température adaptés pour régler l'intensité du courant injecté dans la sonde (10).

4. Dispositif selon l'une des revendications 2 ou 3, **caractérisé par le fait que** les moyens de correction en température comprennent une résistance ayant un coefficient en fonction de la température comparable à la sonde (10) et par l'intermédiaire de laquelle le courant est injecté dans la sonde (10).

5. Dispositif selon l'une des revendications 2 ou 3, **caractérisé par le fait qu'**il comprend des moyens aptes à mesurer la tension aux bornes de la sonde et à régler le courant injecté dans celle-ci pour définir une puissance constante.

6. Dispositif selon la revendication 2, **caractérisé par le fait que** les moyens de correction en température sont adaptés pour agir sur la valeur de la dérivée normée correspondant au niveau mesuré.

7. Dispositif selon la revendication 6, **caractérisé par le fait que** les moyens de correction en température sont adaptés pour calculer les valeurs obtenues pour chacun des niveaux haut et bas donnés en fonction de la température.

8. Dispositif selon la revendication 7, **caractérisé par le fait que** les moyens de correction en température sont adaptés pour calculer des valeurs correspondantes des niveaux haut et bas donnés sur la base des équations

5

$$NVb(T) = NVbo \; (1 + \alpha \; (T\text{-}To) \; )$$

$$NVh(T) = NVho \; (1 + \alpha \; (T\text{-}To) \; )$$

NVb(T) : Niveau bas en fonction de la température (à utiliser pour normer le niveau)
NVh(T) : Niveau haut en fonction de la température (à utiliser pour normer le niveau)
NVbo : Niveau bas à la température de référence To
NVho : Niveau haut à la température de référence To
T : Température courante
To : Température de référence
$\alpha$: Coefficient de correction

9. Dispositif selon la revendication 8, **caractérisé par le fait que** les moyens de correction en température comprennent un circuit apte à délivrer les valeurs correspondantes des niveaux haut et bas donnés corrigés en fonction de la température.

10. Dispositif selon la revendication 9, **caractérisé par le fait que** les moyens de correction en température comprennent un pont diviseur résistif adapté pour délivrer la valeur correspondant au niveau haut donné et la valeur correspondant au niveau bas donné, ledit pont diviseur résistif étant alimenté par l'intermédiaire d'un générateur de courant associé à une résistance R alpha ayant un coefficient de température identique à celui de la sonde.

11. Dispositif selon la revendication 6, **caractérisé par le fait que** les moyens de correction en température sont adaptés pour corriger la valeur NV mesurée.

12. Dispositif selon la revendication 11, **caractérisé par le fait que** les moyens de correction en température sont adaptés pour calculer une valeur de niveau NV(T) corrigée en température.

13. Dispositif selon l'une des revendications 11 ou 12, **caractérisé par le fait que** les moyens de correction en température sont adaptés pour calculer une valeur de niveau corrigé sur la base de la relation :

$$NVc = NV(T) \; ( \; 1 + \alpha \; (T\text{-}To))$$

NV(T): Niveau lu par l'électronique de traitement de la mesure à la température T
NVc : Niveau Corrigé (à utiliser pour normer le niveau)
T : Température courante
To : Température de référence
$\alpha$: Coefficient de correction

14. Dispositif selon l'une des revendications 11 à 13, **caractérisé par le fait que** les moyens de correction en température comprennent un circuit apte à délivrer une valeur de mesure corrigée.

15. Dispositif selon l'une des revendications 11 à 14, **caractérisé par le fait que** les moyens de correction en température comprennent un amplificateur à commande de gain piloté par un signal représentatif de la température.

**Patentansprüche**

1. Vorrichtung zum Erkennen des Füllstands einer Flüssigkeit, umfassend:

- eine Widerstandssonde (10), die dazu gedacht ist, mindestens teilweise in die Flüssigkeit eingetaucht zu sein,
- Stromversorgungsmittel (20), die in der Lage sind, einen geregelten elektrischen Versorgungsstrom an die Sonde (10) anzulegen,

- Mittel zum Messen des Wertes der Ableitung nach der Zeit der Spannung, die sich an den Klemmen der Sonde (10) ergibt, und

**dadurch gekennzeichnet, dass** sie ferner Mittel (32) umfasst, um den Flüssigkeitsstand zwischen einem gegebenen hohen Füllstand und einem gegebenen tiefen Füllstand einzuordnen, indem der Standardwert der Ableitung, der dem gemessenen Füllstand entspricht, mit einem Wert verglichen wird, der für jeden der gegebenen hohen und tiefen Füllstände erzielt wird.

2.  Vorrichtung nach Anspruch 1, **dadurch gekennzeichnet, dass** sie ferner Mittel zur Temperaturkorrektur des gemessenen Flüssigkeitsfüllstands umfasst.

3.  Vorrichtung nach Anspruch 2, **dadurch gekennzeichnet, dass** die Temperaturkorrekturmittel geeignet sind, um die Stärke des in die Sonde (10) eingespeisten Stroms zu regulieren.

4.  Vorrichtung nach einem der Ansprüche 2 oder 3, **dadurch gekennzeichnet, dass** die Temperaturkorrekturmittel einen Widerstand umfassen, der einen temperaturabhängigen Koeffizienten aufweist, der mit dem der Sonde (10) vergleichbar ist, und über den der Strom in die Sonde (10) eingespeist wird.

5.  Vorrichtung nach einem der Ansprüche 2 oder 3, **dadurch gekennzeichnet, dass** sie Mittel umfasst, die geeignet sind, um die Spannung an den Klemmen der Sonde zu messen und den Strom zu regulieren, der darin eingespeist wird, um eine konstante Leistung zu definieren.

6.  Vorrichtung nach Anspruch 2, **dadurch gekennzeichnet, dass** die Temperaturkorrekturmittel geeignet sind, um auf den Wert der Standardableitung einzuwirken, die dem gemessenen Füllstand entspricht.

7.  Vorrichtung nach Anspruch 6, **dadurch gekennzeichnet, dass** die Temperaturkorrekturmittel geeignet sind, um die Werte zu berechnen, die für jeden der hohen und tiefen Füllstände erzielt werden, die in Abhängigkeit von der Temperatur gegeben sind.

8.  Vorrichtung nach Anspruch 7, **dadurch gekennzeichnet, dass** die Temperaturkorrekturmittel geeignet sind, um entsprechende Werte der hohen und tiefen Füllstände auf der Grundlage der Gleichungen

$$NVb(T) = NVbo \ (1 + \alpha(T-To))$$

$$NVh(T) = NVho \ (1 + \alpha(T-To))$$

zu berechnen,

NVb(T): temperaturabhängiger tiefer Füllstand (zum Standardisieren des Füllstands zu verwenden)
NVh(T): temperaturabhängiger hoher Füllstand (zum Standardisieren des Füllstands zu verwenden)
NVbo: tiefer Füllstand auf der Referenztemperatur To
NVho: hoher Füllstand auf der Referenztemperatur To
T: aktuelle Temperatur
To: Referenztemperatur
α: Korrekturkoeffizient

9.  Vorrichtung nach Anspruch 8, **dadurch gekennzeichnet, dass** die Temperaturkorrekturmittel eine Schaltung umfassen, die geeignet ist, um die entsprechenden Werte der gegebenen hohen und tiefen Füllstände, die in Abhängigkeit von der Temperatur korrigiert sind, auszugeben.

10. Vorrichtung nach Anspruch 9, **dadurch gekennzeichnet, dass** die Temperaturkorrekturmittel eine Widerstandsteilerbrücke umfassen, die geeignet ist, um den Wert, der dem gegebenen hohen Füllstand entspricht, und den Wert, der dem gegebenen tiefen Füllstand entspricht, abzugeben, wobei die Widerstandsteilerbrücke über einen Stromgenerator versorgt wird, der mit einem Widerstand R-Alpha verknüpft ist, der einen Temperaturkoeffizienten aufweist, der mit dem der Sonde identisch ist.

11. Vorrichtung nach Anspruch 6, **dadurch gekennzeichnet, dass** die Temperaturkorrekturmittel geeignet sind, um den gemessenen Wert NV zu korrigieren.

12. Vorrichtung nach Anspruch 11, **dadurch gekennzeichnet, dass** die Temperaturkorrekturmittel geeignet sind, um einen temperaturkorrigierten Füllstandwert NV(T) zu berechnen.

13. Vorrichtung nach einem der Ansprüche 11 oder 12, **dadurch gekennzeichnet, dass** die Temperaturkorrekturmittel geeignet sind, um einen korrigierten Füllstandwert auf der Grundlage der Beziehung:

$$NVc = NV(T) \ (1 + \alpha(T-To))$$

zu berechnen,

NV(T): Füllstand, der von der Elektronik zur Verarbeitung der Messung auf der Temperatur T abgelesen wird
NVc: korrigierter Füllstand (zum Standardisieren des Füllstands zu verwenden)
T: aktuelle Temperatur
To: Referenztemperatur
$\alpha$: Korrekturkoeffizient

14. Vorrichtung nach einem der Ansprüche 11 bis 13, **dadurch gekennzeichnet, dass** die Temperaturkorrekturmittel eine Schaltung umfassen, die geeignet ist, um einen korrigierten Messwert abzugeben.

15. Vorrichtung nach einem der Ansprüche 11 bis 14, **dadurch gekennzeichnet, dass** die Temperaturkorrekturmittel einen Verstärkungsregler umfassen, der durch ein Signal angesteuert wird, das die Temperatur darstellt.

**Claims**

1. Device for detecting the level of a liquid comprising:

   - a resistive probe (10) intended to be at least partially immersed in the liquid,
   - electrical power supply means (20) capable of applying a controlled electrical power supply current to the probe (10),
   - means for measuring the value of the derivative over time of the resulting voltage at the terminals of the probe (10), and

   **characterized in that** it further comprises means (32) for locating the liquid level between a given high level and a given low level, by comparing the normed value of the derivative corresponding to the measured level against a value obtained for each of said given high and low levels.

2. Device according to Claim 1, **characterized in that** it further comprises temperature-mode correction means for the measured liquid level.

3. Device according to Claim 2, **characterized in that** the temperature-mode correction means are adapted to set the intensity of the current injected into the probe (10).

4. Device according to one of Claims 2 or 3, **characterized in that** the temperature-mode correction means comprise a resistor having a coefficient as a function of temperature comparable to the probe (10) and via which the current is injected into the probe (10).

5. Device according to one of Claims 2 or 3, **characterized in that** it comprises means suitable for measuring the voltage at the terminals of the probe and for setting the current injected therein to define a constant power.

6. Device according to Claim 2, **characterized in that** the temperature-mode correction means are adapted to act on the value of the normed derivative corresponding to the measured level.

7. Device according to Claim 6, **characterized in that** the temperature-mode correction means are adapted to calculate the values obtained for each of the given high and low levels as a function of the temperature.

8. Device according to Claim 7, **characterized in that** the temperature-mode correction means are adapted to calculate corresponding values of the given high and low levels on the basis of the equations

$$NVb(T) = NVbo (1 + \alpha (T-To))$$

$$NVh(T) = NVho (1 + \alpha (T-To))$$

NVb(T): low level as a function of temperature (to be used to norm the level)
NVh(T): high level as a function of temperature (to be used to norm the level)
NVbo: low level at the reference temperature To NVho: high level at the reference temperature To
T: current temperature
To: reference temperature
$\alpha$: correction coefficient.

9. Device according to Claim 8, **characterized in that** the temperature-mode correction means comprise a circuit suitable for delivering the corresponding values of the given high and low levels low levels corrected as a function of temperature.

10. Device according to Claim 9, **characterized in that** the temperature-mode correction means comprise a resistive divider bridge adapted to deliver the value corresponding to the given high level and the value corresponding to the given low level, said resistive divider bridge being powered via a current generator associated with an alpha resistor R having a temperature coefficient identical to that of the probe.

11. Device according to Claim 6, **characterized in that** the temperature-mode correction means are adapted to correct the measured NV value.

12. Device according to Claim 11, **characterized in that** the temperature-mode correction means are adapted to calculate a temperature-corrected level value NV(T).

13. Device according to one of Claims 11 or 12, **characterized in that** the temperature-mode correction means are adapted to calculate a corrected level value on the basis of the relationship:

$$NVc = NV(T) (1 + \alpha (T-To))$$

NV(T): level read by the measurement processing electronics at the temperature T
NVc: corrected level (to be used to norm the level)
T: current temperature
To: reference temperature
$\alpha$: correction coefficient.

14. Device according to one of Claims 11 to 13, **characterized in that** the temperature-mode correction means comprise a circuit suitable for delivering a corrected measurement value.

15. Device according to one of Claims 11 to 14, **characterized in that** the temperature-mode correction means comprise an amplifier with gain control driven by a signal representative of the temperature.

30
38

COMMANDE

20

34

Dérivateur

21

34

Acquisition
et
Traitement

22

Alimentation
Régulée

40

Sortie
Niveau

10

Amplificateur
Soustracteur

Sortie
Température

42

36

32

**FIG.1**

20

31

Commande : Intensité

21

Commande : commutation

Electronique
de commande

Mesure : tensions aux bornes du

10

Electronique
de mesure

32

**FIG.2**

## FIG.3

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2367276 A
- FR 2514497 A
- FR 2690521 A
- FR 2703774 A
- FR 2703775 A
- US 5321633 A
- FR 2690521